(19) Europäisches Patentamt
European Patent Office
Office européen des brevets

(11) **EP 4 462 493 A1**

(12) **EUROPEAN PATENT APPLICATION**
published in accordance with Art. 153(4) EPC

(43) Date of publication:
**13.11.2024 Bulletin 2024/46**

(21) Application number: **22918886.7**

(22) Date of filing: **26.12.2022**

(51) International Patent Classification (IPC):
**H01M 4/13** (2010.01)    **H01M 4/36** (2006.01)
**H01M 4/62** (2006.01)    **H01M 10/0562** (2010.01)

(52) Cooperative Patent Classification (CPC):
**H01M 4/13; H01M 4/36; H01M 4/62;
H01M 10/0562;** Y02E 60/10

(86) International application number:
**PCT/JP2022/048052**

(87) International publication number:
**WO 2023/132303 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2022 JP 2022000167**

(71) Applicants:
• **Panasonic Holdings Corporation
Osaka 571-8501 (JP)**

• **TOYOTA JIDOSHA KABUSHIKI KAISHA
Toyota-shi
Aichi 471-8571 (JP)**

(72) Inventors:
• **NAGAO, Kenji
Kadoma-shi, Osaka 571-0057 (JP)**
• **NISHIO, Yusuke
Kadoma-shi, Osaka 571-0057 (JP)**
• **SASAKI, Izuru
Kadoma-shi, Osaka 571-0057 (JP)**

(74) Representative: **Eisenführ Speiser
Patentanwälte Rechtsanwälte PartGmbB
Postfach 10 60 78
28060 Bremen (DE)**

(54) **POSITIVE ELECTRODE MATERIAL AND BATTERY**

(57)    A positive electrode material 1000 according to the present disclosure includes a mixture of a positive electrode active material 110, a solid electrolyte 100, and a conductive material 140. The conductive material 140 includes a first conductive material 150 having an average long-axis diameter of 1 $\mu$m or more and a second conductive material 160 having an average particle diameter of more than 23 nm and 100 nm or less. A ratio of a volume of the positive electrode active material 110 to a sum of the volume of the positive electrode active material 110 and a volume of the solid electrolyte 100 is 50% or more and 90% or less. A battery 2000 according to the present disclosure includes a positive electrode 201 including the positive electrode material 1000, a negative electrode 203, and an electrolyte layer 202 disposed between the positive electrode 201 and the negative electrode 203.

FIG.1

EP 4 462 493 A1

Processed by Luminess, 75001 PARIS (FR)

## Description

TECHNICAL FIELD

The present disclosure relates to a positive electrode material and a battery.

BACKGROUND ART

Patent Literature 1 discloses a battery including a positive electrode in which a positive electrode active material and a solid electrolyte are included. According to the description in Patent Literature 1, the positive electrode may include a conductive additive, such as carbon black.

CITATION LIST

Patent Literature

Patent Literature 1: JP 2015-076180 A

SUMMARY OF INVENTION

Technical Problem

The present disclosure provides a positive electrode material suitable for enhancing the battery charge and discharge characteristics.

Solution to Problem

A positive electrode material according to one aspect of the present disclosure includes

a mixture of a positive electrode active material, a solid electrolyte, and a conductive material, wherein
the conductive material includes a first conductive material having an average long-axis diameter of 1 $\mu$m or more and a second conductive material having an average particle diameter of more than 23 nm and 100 nm or less, and
a ratio of a volume of the positive electrode active material to a sum of the volume of the positive electrode active material and a volume of the solid electrolyte is 50% or more and 90% or less.

Advantageous Effects of Invention

According to the present disclosure, it is possible to provide a positive electrode material suitable for enhancing the battery charge and discharge characteristics.

BRIEF DESCRIPTION OF DRAWINGS

FIG. 1 is a cross-sectional view schematically showing the configuration of a positive electrode material according to Embodiment 1.
FIG. 2 is a cross-sectional view schematically showing the configuration of a positive electrode material according to Modification 1.
FIG. 3 is a cross-sectional view schematically showing the configuration of a battery according to Embodiment 2.

DESCRIPTION OF EMBODIMENTS

(Findings underlying the present disclosure)

Patent Literature 1 discloses a battery including a positive electrode in which a positive electrode active material and a solid electrolyte are included. According to the description in Patent Literature 1, the positive electrode may include a conductive additive, such as carbon black.
The present inventors have made earnest studies on methods for enhancing the charge and discharge characteristics of solid-state lithium-ion batteries. As a result of the studies, the present inventors have found that controlling the particle diameter of the conductive material can reduce the resistance change rate between before and after charge and discharge cycles. This reduction is presumably due to the following reason: in the case where the conductive material has an appropriate particle diameter, the ion conduction paths between the positive electrode active material and the solid electrolyte are less subject to interruption and thus electron conduction paths can be formed, thereby increasing the effective reaction area of the positive electrode active material.

(Outline of one aspect according to the present disclosure)

A positive electrode material according to a first aspect of the present disclosure includes

a mixture of a positive electrode active material, a solid electrolyte, and a conductive material, wherein
the conductive material includes a first conductive material having an average long-axis diameter of 1 $\mu$m or more and a second conductive material having an average particle diameter of more than 23 nm and 100 nm or less, and
a ratio of a volume of the positive electrode active material to a sum of the volume of the positive electrode active material and a volume of the solid electrolyte is 50% or more and 90% or less.

The above configuration facilitates the bonding between the first conductive material and the second conductive material in the positive electrode. It is consequently possible to efficiently form a network for electron conduction in the positive electrode. In addition, the average particle diameter of the second conductive material is sufficiently small, thereby facilitating the adhesion of the second conductive material to the surface of the positive electrode active material. Consequently, on the surface of the positive electrode active material, the ion conduction paths are less subject to interruption and thus electron conduction paths can be formed. This increases the effective reaction area of the positive electrode active material. It is therefore possible to reduce the resistance change rate between before and after charge and discharge cycles, thereby enhancing the battery charge and discharge characteristics.

Moreover, since the ratio of the volume of the positive electrode active material to the sum of the volume of the positive electrode active material and the volume of the solid electrolyte is 50% or more and 90% or less, the energy density of the positive electrode can be enhanced.

In a second aspect of the present disclosure, for example, the positive electrode material according to the first aspect may be such that the ratio of the volume of the positive electrode active material to the sum of the volume of the positive electrode active material and the volume of the solid electrolyte is 65% or more and 85% or less. According to the above configuration, it is possible to further enhance the energy density of the positive electrode.

In a third aspect of the present disclosure, for example, the positive electrode material according to the second aspect may be such that the ratio of the volume of the positive electrode active material to the sum of the volume of the positive electrode active material and the volume of the solid electrolyte is 67% or more and 75% or less. According to the above configuration, it is possible to further enhance the energy density of the positive electrode.

In a fourth aspect of the present disclosure, for example, the positive electrode material according to any one of the first to third aspects may be such that a ratio of a mass of the conductive material to a mass of the positive electrode active material is 10% or less. According to the above configuration, it is possible to prevent the conductive material from hindering the lithium-ion conduction between the positive electrode active material and the solid electrolyte.

In a fifth aspect of the present disclosure, for example, the positive electrode material according to the fourth aspect may be such that the ratio of the mass of the conductive material to the mass of the positive electrode active material is 3% or less. According to the above configuration, it is possible to further prevent the conductive material from hindering the lithium-ion conduction between the positive electrode active material and the solid electrolyte.

In a sixth aspect of the present disclosure, for example, the positive electrode material according to any one of the first to fifth aspects may be such that a ratio of a mass of the second conductive material to the mass of the conductive material is 80% or less. According to the above configuration, it is possible to further enhance the electronic conductivity of the positive electrode.

In a seventh aspect of the present disclosure, for example, the positive electrode material according to the sixth aspect may be such that the ratio of the mass of the second conductive material to the mass of the conductive material is 5% or more and 50% or less. According to the above configuration, it is possible to further enhance the electronic conductivity of the positive electrode.

In an eighth aspect of the present disclosure, for example, the positive electrode material according to the sixth aspect may be such that the ratio of the mass of the second conductive material to the mass of the conductive material is 6% or more and 25% or less. According to the above configuration, it is possible to further enhance the electronic conductivity of the positive electrode.

In a ninth aspect of the present disclosure, for example, the positive electrode material according to any one of the first to eighth aspects may be such that the first conductive material has an average long-axis diameter of 4 $\mu$m or more.

The above configuration facilitates the first conductive material to form electron conduction paths through which long-range electron conduction can be performed in the positive electrode. It is therefore possible to further enhance the electronic conductivity of the positive electrode.

In a tenth aspect of the present disclosure, for example, the positive electrode material according to any one of the first to ninth aspects may be such that the second conductive material has an average particle diameter of more than 23 nm and 70 nm or less. The above configuration further facilitates the adhesion of the second conductive material to the surface of the positive electrode active material. This bonds the first conductive material and the second conductive material together, thereby further facilitating the formation of a network for electron conduction in the positive electrode.

In an eleventh aspect of the present disclosure, for example, the positive electrode material according to the tenth aspect may be such that the second conductive material has an average particle diameter of more than 23 nm and 50 nm or less. The above configuration even further facilitates the adhesion of the second conductive material to the surface of the positive electrode active material.

In a twelfth aspect of the present disclosure, for example, the positive electrode material according to any one of the first to eleventh aspects may be such that the conductive material includes a carbon material. According to the above configuration, it is possible to further enhance the electronic conductivity of the positive electrode.

In a thirteenth aspect of the present disclosure, for example, the positive electrode material according to any one of the first to twelfth aspects may be such that the first conductive material includes a fibrous carbon material. According to the above configuration, it is possible to further enhance the electronic conductivity of the positive electrode.

In a fourteenth aspect of the present disclosure, for example, the positive electrode material according to any one of the first to thirteenth aspects may be such that the second conductive material includes carbon black. According to the above configuration, it is possible to further enhance the electronic conductivity of the positive electrode.

In a fifteenth aspect of the present disclosure, for example, the positive electrode material according to the fourteenth aspect may be such that the carbon black includes acetylene black. According to the above configuration, it is possible to further enhance the electronic conductivity of the positive electrode.

In a sixteenth aspect of the present disclosure, for example, the positive electrode material according to any one of the first to fifteenth aspects may be such that the solid electrolyte includes at least one selected from the group consisting of a sulfide solid electrolyte and a halide solid electrolyte. According to the above configuration, it is possible to enhance the battery output characteristics.

In a seventeenth aspect of the present disclosure, for example, the positive electrode material according to any one of the first to sixteenth aspects may be such that the positive electrode active material has a layered rock salt structure. In the layered rock salt structure, a transition metal and lithium are regularly arranged to form a two-dimensional plane, and lithium can consequently diffuse two-dimensionally. Therefore, according to the above configuration, it is possible to enhance the battery energy density.

In an eighteenth aspect of the present disclosure, for example, the positive electrode material according to any one of the first to seventeenth aspects may be such that the positive electrode material further includes a coating layer coating at least a portion of a surface of the positive electrode active material. According to the above configuration, it is possible to further reduce the battery resistance, thereby enhancing the battery charge and discharge characteristics.

A battery according to a nineteenth aspect of the present disclosure includes:

a positive electrode including the positive electrode material according to any one of the first to eighteenth aspects;
a negative electrode; and
an electrolyte layer disposed between the positive electrode and the negative electrode.

According to the above configuration, it is possible to enhance the battery charge and discharge characteristics.

In a twentieth aspect of the present disclosure, for example, the battery according to the nineteenth aspect may be such that the electrolyte layer includes a sulfide solid electrolyte. According to the above configuration, it is possible to further enhance the battery charge and discharge characteristics.

Embodiments of the present disclosure will be described below with reference to the drawings.

(Embodiment 1)

[Positive electrode material]

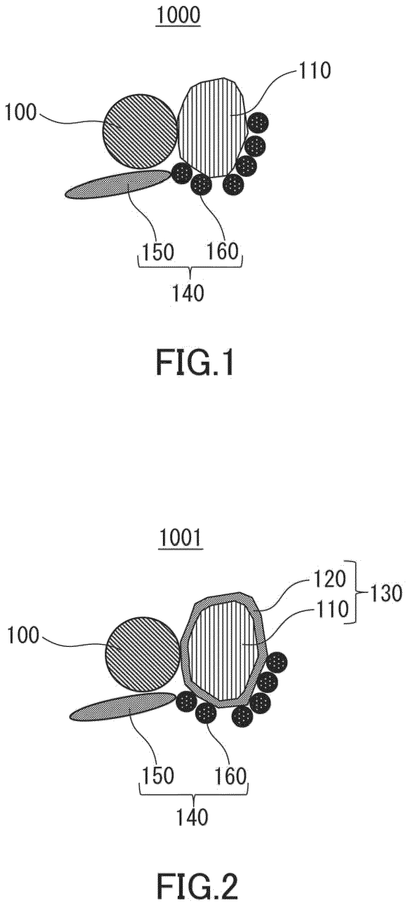

FIG. 1 is a cross-sectional view schematically showing the configuration of a positive electrode material 1000 according to Embodiment 1.

The positive electrode material 1000 includes a mixture of a positive electrode active material 110, a solid electrolyte 100, and a conductive material 140. The conductive material 140 includes a first conductive material 150 having an average long-axis diameter of 1 $\mu$m or more and a second conductive material 160 having an average particle diameter of more than 23 nm and 100 nm or less. The ratio of the volume of the positive electrode active material 110 to the sum of the volume of the positive electrode active material 110 and the volume of the solid electrolyte 100, expressed in percentage, is 50% or more and 90% or less.

The above configuration facilitates the bonding between the first conductive material 150 and the second conductive material 160 in the positive electrode. It is consequently possible to efficiently form a network for electron conduction in the positive electrode. In addition, the average particle diameter of the second conductive material 160 is sufficiently small, thereby facilitating the adhesion of the second conductive material 160 to the surface of the positive electrode active material 110. Consequently, on the surface of the positive electrode active material 110, the ion conduction paths are less subject to interruption and thus electron conduction paths can be formed. This increases the effective reaction area of the positive electrode active material 110. It is therefore possible to reduce the resistance change rate between before and after charge and discharge cycles, thereby enhancing the battery charge and discharge characteristics.

Moreover, since the ratio of the volume of the positive electrode active material 110 to the sum of the volume of the positive electrode active material 110 and the volume of the solid electrolyte 100 is 50% or more and 90% or less, the energy density of the positive electrode can be enhanced.

The average long-axis diameter of the first conductive material 150 can be measured, for example, by using a scanning electron microscope (SEM) image captured with an SEM. Specifically, from the SEM image, 20 particles of the first conductive material 150 are randomly selected, and the average value of the long-axis diameters of these particles is calculated. Thus, the average long-axis diameter is determined. Here, the long-axis diameter of each of the particles of the first conductive material 150 is defined as the diameter of a circle having the minimum area surrounding the particle of the first conductive material 150 in the SEM image of the particles of the first conductive material 150.

The average particle diameter of the second conductive material 160 can be measured, for example, by using a transmission electron microscope (TEM) image captured with a TEM. Specifically, from the TEM image, 20 particles of the second conductive material 160 are randomly selected, and the average value of the area equivalent diameters of these particles is calculated. Thus, the average particle diameter is determined.

The ratio of the volume of the positive electrode active material 110 to the sum of the volume of the positive electrode active material 110 and the volume of the solid electrolyte 100 can be calculated, for example, by the following method. The positive electrode active material 110 included in the positive electrode material 1000 can be extracted, for example, by dissolving only the solid electrolyte 100 in a solvent. From the masses before and after the dissolution, it is possible to determine the sum of the masses of the positive electrode active material 110 and the solid electrolyte 100 and the mass of the positive electrode active material 110. Moreover, it is also possible to subject the positive electrode material 1000 to ICP analysis to determine the element ratio of each of the positive electrode active material 110 and the solid electrolyte 100 thus to calculate the mass from the element ratio determined. The specific gravity of each of the positive electrode active material 110 and the solid electrolyte 100 can be obtained from literature or the like. These values can be used to calculate the ratio of the volume of the positive electrode active material 110 to the sum of the volume of the positive electrode active material 110 and the volume of the solid electrolyte 100. In the case where the positive electrode material 1000 is included in an electrode, the ratio of the volume of the positive electrode active material 110 to the sum of the volume of the positive electrode active material 110 and the volume of the solid electrolyte 100 can be calculated, for example, by the following method. The mass of the solid electrolyte 100 included in the electrode can be determined, for example, by extraction into a solvent or ICP analysis. The masses of the conductive material and the binder included in the electrode can be determined by gas analysis such as thermogravimetry-differential thermal analysis (TG-DTA) in an oxygen atmosphere or an air atmosphere. The mass of the solid electrolyte 100 determined and the masses of the conductive material and the binder determined are subtracted from the total mass of the electrode, and the difference is defined as the mass of the positive electrode active material 110 included in the electrode. These values can be used to calculate the ratio of the volume of the positive electrode active material 110 to the sum of the volumes of the positive electrode active material 110 and the solid electrolyte 100 included in the electrode. Moreover, it is also possible to subject the electrode to observation and image analysis with a scanning electron microscope-energy dispersive x-ray detector (SEM-EDS) to calculate the volume ratio.

The ratio of the volume of the positive electrode active material 110 to the sum of the volume of the positive electrode active material 110 and the volume of the solid electrolyte 100 may be 65% or more and 85% or less. According to the above configuration, it is possible to further enhance the energy density of the positive electrode.

The ratio of the volume of the positive electrode active material 110 to the sum of the volume of the positive electrode active material 110 and the volume of the solid electrolyte 100 may be 67% or more and 75% or less. According to the above configuration, it is possible to further enhance the energy density of the positive electrode.

The ratio of the mass of the conductive material 140 to the mass of the positive electrode active material 110, expressed in percentage, may be 10% or less. According to the above configuration, it is possible to prevent the conductive material 140 from hindering the lithium-ion conduction between the positive electrode active material 110 and the solid electrolyte 100.

The ratio of the mass of the conductive material 140 to the mass of the positive electrode active material 110 can be calculated, for example, by the following method. The mass of the positive electrode active material 110 included in the positive electrode material 1000 can be determined by the above method. The mass of the conductive material 140 included in the positive electrode material 1000 can be determined, for example, from a decrease in mass due to high-temperature thermal decomposition. These values can be used to calculate the ratio of the mass of the conductive material 140 to the mass of the positive electrode active material 110.

The ratio of the mass of the conductive material 140 to the mass of the positive electrode active material 110 may be 3% or less. According to the above configuration, it is possible to further prevent the conductive material 140 from hindering the lithium-ion conduction between the positive electrode active material 110 and the solid electrolyte 100.

The lower limit for the ratio of the mass of the conductive material 140 to the mass of the positive electrode active material 110 is not particularly limited. The lower limit is, for example, 0.5%. The lower limit may be 1%.

The ratio of the mass of the second conductive material 160 to the mass of the conductive material 140, expressed in percentage, may be 80% or less. According to the above configuration, it is possible to further enhance the electronic conductivity of the positive electrode.

The ratio of the mass of the second conductive material 160 to the mass of the conductive material 140 can be calculated, for example, by the following method. The conductive material 140 extracted by the above method can be subjected to particle size distribution analysis, classification, or the like to determine the mass of the second conductive material 160 with respect to the mass of the conductive material 140. Thus, the ratio of the mass of the second conductive material 160 to the mass of the conductive material 140 can be calculated.

The ratio of the mass of the second conductive material 160 to the mass of the conductive material 140 may be 5% or more and 50% or less. According to the above configuration, it is possible to further enhance the electronic conductivity of the positive electrode.

The ratio of the mass of the second conductive material 160 to the mass of the conductive material 140 may be 6% or more and 25% or less. According to the above configuration, it is possible to further enhance the electronic conductivity of the positive electrode.

(Conductive material)

The conductive material 140 may include a carbon material. In other words, the first conductive material 150 and the second conductive material 160 each may include a carbon material. According to the above configuration, it is possible to further enhance the electronic conductivity of the positive electrode.

The conductive material 140 may be a carbon material. In other words, the first conductive material 150 and the second conductive material 160 each may be a carbon material. According to the above configuration, it is possible to further enhance the electronic conductivity of the positive electrode.

The first conductive material 150 may include a fibrous carbon material. According to the above configuration, it is possible to further enhance the electronic conductivity of the positive electrode.

The first conductive material 150 may be the fibrous carbon material. According to the above configuration, it is possible to further enhance the electronic conductivity of the positive electrode.

An example of the fibrous carbon material is a fibrous carbon, such as a vapor-grown carbon fiber, a carbon nanotube, or a carbon nanofiber. In the case where the first conductive material 150 includes the fibrous carbon material, the first conductive material 150 may include any one of the above materials or may include two or more of the above materials. In the case where the first conductive material 150 is the fibrous carbon material, the first conductive material 150 may consist of any one of the above materials or may consist of two or more of the above materials.

The second conductive material 160 may include carbon black. According to the above configuration, it is possible to further enhance the electronic conductivity of the positive electrode.

The second conductive material 160 may be the carbon black. According to the above configuration, it is possible to further enhance the electronic conductivity of the positive electrode.

Examples of the carbon black include acetylene black and ketjen black. In the case where the second conductive material 160 includes the carbon black, the second conductive material 160 may include acetylene black and may include ketjen black. The second conductive material 160 may include both acetylene black and ketjen black. In the case where the carbon black includes acetylene black, the electronic conductivity of the positive electrode can be further enhanced. In the case where the second conductive material 160 is the carbon black, the second conductive material 160 may be acetylene black and may be ketjen black. The second conductive material 160 may consist of acetylene black and ketjen black.

In the case where the first conductive material 150 is the fibrous carbon material, the first conductive material 150 may include the fibrous carbon material as the main component and further include unavoidable impurities, or a starting material for use in synthesizing the fibrous carbon material, a by-product, a decomposition product, etc. In the present disclosure, the "main component" refers to a component having the highest mass content.

The first conductive material 150 may include the fibrous carbon material in, for example, 100% on a mass basis with respect to the entire first conductive material 150, except for unavoidably incorporated impurities.

Thus, the first conductive material 150 may consist of the fibrous carbon material.

In the case where the second conductive material 160 is the carbon black, the second conductive material 160 may include the carbon black as the main component and further include unavoidable impurities, or a starting material for use in synthesizing the carbon black, a by-product, a decomposition product, etc.

The second conductive material 160 may include the carbon black in, for example, 100% on a mass basis with respect to the entire second conductive material 160, except for unavoidably incorporated impurities.

Thus, the second conductive material 160 may consist of the carbon black.

The first conductive material 150 may have an average long-axis diameter of 4 $\mu$m or more. The above configuration facilitates the first conductive material 150 to form electron conduction paths through which long-range electron conduction can be performed in the positive electrode. It is therefore possible to further enhance the electronic conductivity of the positive electrode.

The upper limit for the average long-axis diameter of the first conductive material 150 is not particularly limited. The upper limit is, for example, 10 $\mu$m. The upper limit may be 8 $\mu$m.

The second conductive material 160 may have an average particle diameter of more than 23 nm and 70 nm or less. The above configuration further facilitates the adhesion of the second conductive material 160 to the surface of the positive electrode active material 110. This bonds the first conductive material 150 and the second conductive material 160 together, thereby facilitating the formation of a network for electron conduction in the positive electrode.

The second conductive material 160 may have an average particle diameter of more than 23 nm and 50 nm or less. The above configuration even further facilitates the adhesion of the second conductive material 160 to the surface of the positive electrode active material 110.

The first conductive material 150 may have any shape. The first conductive material 150 may be, for example, fibrous or acicular. The first conductive material 150 may be fibrous.

The second conductive material 160 may have any shape. The second conductive material 160 may be, for example, spherical or ellipsoidal. The second conductive material 160 may be spherical.

The conductive material 140 may include a conductive material different from the first conductive material 150 and from the second conductive material 160. Examples of such a conductive material include graphite, such as natural graphite or artificial graphite, a metal fiber, fluorinated carbon, a metal powder, such as an aluminum powder, a conductive whisker, such as a zinc oxide whisker or a potassium titanate whisker, a conductive metal oxide, such as titanium oxide, and a conductive polymer compound, such as a polyaniline compound, a polypyrrole compound, or a polythiophene compound. According to the above configuration, it is possible to further enhance the electronic conductivity of the positive electrode.

The conductive material 140 may consist of the first conductive material 150 and the second conductive material 160. In other words, the conductive material 140 may be free of a conductive material different from the first conductive material 150 and from the second conductive material 160.

(Positive electrode active material)

The positive electrode active material 110 can be a material usable as the positive electrode active material of all-solid-state lithium-ion batteries.

Examples of the positive electrode active material 110 include $LiCoO_2$, $LiNi_xMe_{1-x}O_2$, $LiNi_xCo_{1-x}O_2$, $LiNi_{1/3}Co_{1/3}Mn_{1/3}O_2$, $LiMnO_2$, a heteroelement-substituted Li-Mn spinel, a lithium titanate, a lithium metal phosphate, and a transition metal oxide. In $LiNi_xMe_{1-x}O_2$, x satisfies $0.5 \leq x < 1$, and Me includes at least one selected from the group consisting of Co, Mn, and Al. In $LiNi_xCo_{1-x}O_2$, x satisfies $0 < x < 0.5$. Examples of the heteroelement-substituted Li-Mn spinel include $LiMn_{1.5}Ni_{0.5}O_4$, $LiMn_{1.5}Al_{0.5}O_4$, $LiMn_{1.5}Mg_{0.5}O_4$, $LiMn_{1.5}Co_{0.5}O_4$, $LiMn_{1.5}Fe_{0.5}O_4$, and $LiMm_{1.5}Zn_{0.5}O_4$. Examples of the lithium titanate include $Li_4Ti_5O_{12}$. Examples of the lithium metal phosphate include $LiFePO_4$, $LiMnPO_4$, $LiCoPO_4$, and $LiNiPO_4$. Examples of the transition metal oxide include $V_2O_5$ and MoOs.

The positive electrode active material 110 may be a lithium-containing composite oxide selected from $LiCoO_2$, $LiNi_xMe_{1-x}O_2$, $LiNi_xCo_{1-x}O_2$, $LiNi_{1/3}Co_{1/3}Mn_{1/3}O_2$, $LiMnO_2$, the heteroelement-substituted Li-Mn spinel, the lithium metal phosphate, and the like.

In the case where the positive electrode active material 110 is the lithium-containing composite oxide, the positive electrode active material 110 may have a layered rock salt structure. In the layered rock salt structure, a transition metal and lithium are regularly arranged to form a two-dimensional plane, and lithium can consequently diffuse two-dimensionally. Therefore, according to the above configuration, it is possible to enhance the battery energy density.

(Solid electrolyte)

The solid electrolyte 100 may include at least one selected from the group consisting of a sulfide solid electrolyte, a halide solid electrolyte, an oxide solid electrolyte, a polymer solid electrolyte, and a complex hydride solid electrolyte.

The solid electrolyte 100 may include at least one selected from the group consisting of a sulfide solid electrolyte and a halide solid electrolyte. According to the above configuration, it is possible to enhance the battery output characteristics.

The solid electrolyte 100 may be a mixture of a sulfide solid electrolyte and a halide solid electrolyte.

Examples of the sulfide solid electrolyte include $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$. Moreover, sulfide solid electrolytes having an argyrodite structure typified by $Li_6PS_5Cl$, $Li_6PS_5Br$, LisPSsl, and the like can be used. To these sulfide solid electrolytes, LiX, $Li_2O$, $MO_q$, $Li_pMO_q$, or the like may be added, where X is at least one selected from the group consisting of F, Cl, Br, and I; M is at least one selected from the group consisting of P, Si, Ge, B, Al, Ga, In, Fe, and Zn; and p and q are each a natural number. One or two or more sulfide solid electrolytes selected from the above materials can be used.

According to the above configuration, it is possible to further enhance the ionic conductivity of the sulfide solid electrolyte, thereby further enhancing the battery charge and discharge efficiency.

The halide solid electrolyte is represented, for example, by the following composition formula (1):

$$Li_\alpha M_\beta X_\gamma \qquad \text{Formula (1)}.$$

In the composition formula (1), $\alpha$, $\beta$, and $\gamma$ are each independently a value greater than 0; $\gamma$ can be, for example, 4 or 6; M includes at least one element selected from the group consisting of metalloid elements and metal elements other than Li; and X includes at least one selected from the group consisting of F, Cl, Br, and I.

In the present disclosure, the "metalloid elements" refer to B, Si, Ge, As, Sb, and Te. The "metal elements" refer to all the elements included in Groups 1 to 12 of the periodic table except hydrogen, and all the elements included in Groups 13 to 16 of the periodic table except B, Si, Ge, As, Sb, Te, C, N, P, O, S, and Se. In other words, the "metalloid elements" and "metal elements" are each a group of elements that can become a cation when forming an inorganic compound with a halogen element.

The halide solid electrolyte represented by the composition formula (1) has a higher ionic conductivity than a halide solid electrolyte such as LiI consisting of Li and a halogen element. Consequently, the halide solid electrolyte represented by the composition formula (1) can further enhance the ionic conductivity of the halide solid electrolyte. Therefore, a battery using the solid electrolyte 100 including such a halide solid electrolyte can have a further enhanced charge and discharge efficiency.

In the composition formula (1), M may be at least one element selected from the group consisting of metalloid elements and metal elements other than Li.

In the composition formula (1), X may be at least one selected from the group consisting of F, Cl, Br, and I.

In the composition formula (1), $2.5 \leq \alpha \leq 3$, $1 \leq \beta \leq 1.1$, and $\gamma = 6$ may be satisfied. According to the above configuration, the halide solid electrolyte can have a further enhanced ionic conductivity.

In the composition formula (1), M may include Y (= yttrium). In other words, the halide solid electrolyte may include Y as a metal element. According to the above configuration, the halide solid electrolyte can have a further enhanced ionic conductivity.

The halide solid electrolyte including Y may be represented, for example, by the following composition formula (2):

$$Li_a Me_b Y_c X_6 \qquad (2).$$

In the composition formula (2), $a + mb + 3c = 6$ and $c > 0$ are satisfied. Me is at least one selected from the group consisting of metalloid elements and metal elements other than Li or Y, and m is the valence of the element Me. In the case where the element Me includes a plurality of elements, mb is the sum of values obtained, for each of the elements, by multiplying the composition ratio and the valence together. For example, in the case where Me includes: an element $Me_1$ having a composition ratio $b_1$ and a valence $m_1$; and an element $Me_2$ having a composition ratio $b_2$ and a valence $m_2$, $mb = m_1 b_1 + m_2 b_2$ is satisfied. X is at least one selected from the group consisting of F, Cl, Br, and I.

Me may be, for example, at least one selected from the group consisting of Mg, Ca, Sr, Ba, Zn, Sc, Al, Ga, Bi, Zr, Hf, Ti, Sn, Ta, and Nb.

According to the above configuration, the halide solid electrolyte can have a further enhanced ionic conductivity. Therefore, a battery using the solid electrolyte 100 including such a halide solid electrolyte can have a further enhanced charge and discharge efficiency.

The halide solid electrolyte can be, for example, any of the following materials. According to the following configuration, the halide solid electrolyte can have a further enhanced ionic conductivity.

The halide solid electrolyte may be a material represented by the following composition formula (A1):

$$Li_{6-3d}Y_dX_6 \qquad \text{Formula (A1).}$$

In the composition formula (A1), X is at least one selected from the group consisting of F, Cl, Br, and I, and $0 < d < 2$ is satisfied.

The halide solid electrolyte may be a material represented by the following composition formula (A2):

$$Li_3YX_6 \qquad \text{Formula (A2).}$$

In the composition formula (A2), X is at least one selected from the group consisting of F, Cl, Br, and I.

The halide solid electrolyte may be a material represented by the following composition formula (A3):

$$Li_{3-3\delta}Y_{1+\delta}Cl_6 \qquad \text{Formula (A3).}$$

In the composition formula (A3), $0 < \delta \le 0.15$ is satisfied.

The halide solid electrolyte may be a material represented by the following composition formula (A4):

$$Li_{3-3\delta}Y_{1+\delta}Br_6 \qquad \text{Formula (A4).}$$

In the composition formula (A4), $0 < \delta \le 0.25$ is satisfied.

The halide solid electrolyte may be a material represented by the following composition formula (A5):

$$Li_{3-3\delta+a}Y_{1+\delta-a}Me_aCl_{6-x-y}Br_xI_y \qquad \text{Formula (A5).}$$

In the composition formula (A5), Me includes at least one selected from the group consisting of Mg, Ca, Sr, Ba, and Zn. Me may be at least one selected from the group consisting of Mg, Ca, Sr, Ba, and Zn.

In the composition formula (A5), $-1 < \delta < 2$, $0 < a < 3$, $0 < (3 - 3\delta + a)$, $0 < (1 + \delta - a)$, $0 \le x \le 6$, $0 \le y \le 6$, and $(x + y) \le 6$ are satisfied.

The halide solid electrolyte may be a material represented by the following composition formula (A6):

$$Li_{3-3\delta}Y_{1+\delta-a}Me_aCl_{6-x-y}Br_xI_y \qquad \text{Formula (A6).}$$

In the composition formula (A6), Me includes at least one selected from the group consisting of Al, Sc, Ga, and Bi. Me may be at least one selected from the group consisting of Al, Sc, Ga, and Bi.

In the composition formula (A6), $-1 < \delta < 1$, $0 < a < 2$, $0 < (1 + \delta - a)$, $0 \le x \le 6$, $0 \le y \le 6$, and $(x + y) \le 6$ are satisfied.

The halide solid electrolyte may be a material represented by the following composition formula (A7):

$$Li_{3-3\delta-a}Y_{1+\delta-a}Me_aCl_{6-x-y}Br_xI_y \qquad \text{Formula (A7).}$$

In the composition formula (A7), Me includes at least one selected from the group consisting of Zr, Hf, and Ti. Me may be at least one selected from the group consisting of Zr, Hf, and Ti.

In the composition formula (A7), $-1 < \delta < 1$, $0 < a < 1.5$, $0 < (3 - 3\delta - a)$, $0 < (1 + \delta - a)$, $0 \le x \le 6$, $0 \le y \le 6$, and $(x + y) \le 6$ are satisfied.

The halide solid electrolyte may be a material represented by the following composition formula (A8):

$$Li_{3-3\delta-2a}Y_{1+\delta-a}Me_aCl_{6-x-y}Br_xI_y \qquad \text{Formula (A8).}$$

In the composition formula (A8), Me includes at least one selected from the group consisting of Ta and Nb. Me may be at least one selected from the group consisting of Ta and Nb.

In the composition formula (A8), $-1 < \delta < 1$, $0 < a < 1.2$, $0 < (3 - 3\delta - 2a)$, $0 < (1 + \delta - a)$, $0 \le x \le 6$, $0 \le y \le 6$, and $(x + y) \le 6$ are satisfied.

More specifically, the halide solid electrolyte can be, for example, $Li_3YX_6$, $Li_2MgX_4$, $Li_2FeX_4$, $Li(Al,Ga,In)X_4$, or $Li_3(Al,Ga,In)X_6$, where X is at least one selected from the group consisting of F, Cl, Br, and I.

In the present disclosure, an expression "(A,B,C)" in a chemical formula means "at least one selected from the group consisting of A, B, and C". For example, "(Al,Ga,In)" is synonymous with "at least one selected from the group consisting of Al, Ga, and In". The same applies to other elements.

The oxide solid electrolyte can be, for example: a NASICON solid electrolyte typified by $LiTi_2(PO_4)_3$ and element-substituted substances thereof; a $(LaLi)TiO_3$-based perovskite solid electrolyte; a LISICON solid electrolyte typified by $Li_{14}ZnGe_4O_{16}$, $Li_4SiO_4$, and $LiGeO_4$ and element-substituted substances thereof; a garnet solid electrolyte typified by

$Li_7La_3Zr_2O_{12}$ and element-substituted substances thereof; LisN and H-substituted substances thereof; $Li_3PO_4$ and N-substituted substances thereof; or glass or glass ceramics based on a Li-B-O compound, such as $LiBO_2$ or LisBOs, to which $Li_2SO_4$, $Li_2CO_3$, or the like is added.

The polymer solid electrolyte can be, for example, a compound of a polymer compound and a lithium salt. The polymer compound may have an ethylene oxide structure. The polymer compound having an ethylene oxide structure can contain a lithium salt in a large amount, thereby further enhancing the ionic conductivity. The lithium salt can be $LiPF_6$, $LiBF_4$, $LiSbF_6$, $LiAsF_6$, $LiSOsCFs$, $LiN(SO_2CF_3)_2$, $LiN(SO_2C_2F_5)_2$, $LiN(SO_2CF_3)(SO_2C_4F_9)$, $LiC(SO_2CF_3)_3$, or the like. One or two or more lithium salts selected from the above lithium salts can be used.

The complex hydride solid electrolyte can be, for example, $LiBH_4$-LiI or $LiBH_4$-P2S5.

The solid electrolyte 100 may be free of sulfur. According to the above configuration, it is possible to suppress the generation of hydrogen sulfide gas, thereby achieving a battery with enhanced safety.

The solid electrolyte 100 may have any shape. The solid electrolyte 100 may be, for example, acicular, spherical, or ellipsoidal. The solid electrolyte 100 may be, for example, particulate.

For example, in the case where the solid electrolyte 100 is particulate (e.g., spherical), the solid electrolyte 100 may have a median diameter of 100 $\mu$m or less. In the case where the solid electrolyte 100 has a median diameter of 100 $\mu$m or less, the positive electrode active material 110 and the solid electrolyte 100 can form a favorable dispersion state in the positive electrode material 1000. This enhances the battery charge and discharge characteristics.

The solid electrolyte 100 may have a median diameter of 10 $\mu$m or less. According to the above configuration, the positive electrode active material 110 and the solid electrolyte 100 can form a favorable dispersion state in the positive electrode material 1000.

The solid electrolyte 100 may have a smaller median diameter than the positive electrode active material 110. According to the above configuration, the positive electrode active material 110 and the solid electrolyte 100 can form a more favorable dispersion state in the positive electrode material 1000.

The positive electrode active material 110 may have any shape. The positive electrode active material 101 may be, for example, acicular, spherical, or ellipsoidal. The positive electrode active material 101 may be, for example, particulate.

The positive electrode active material 110 may have a median diameter of 0.1 $\mu$m or more and 100 $\mu$m or less. In the case where the positive electrode active material 110 has a median diameter of 0.1 $\mu$m or more, the positive electrode active material 110 and the solid electrolyte 100 can form a favorable dispersion state in the positive electrode material 1000. This enhances the battery charge and discharge characteristics. In the case where the positive electrode active material 110 has a median diameter of 100 $\mu$m or less, lithium diffuses in the positive electrode active material 110 at a sufficient rate. This enables the battery to operate at a high output.

The positive electrode active material 110 may have a larger median diameter than the solid electrolyte 100. In this case, the positive electrode active material 110 and the solid electrolyte 100 can form a favorable dispersion state.

In the present disclosure, the median diameter means the particle diameter (d50) at a cumulative volume equal to 50% in the volumetric particle size distribution. The volumetric particle size distribution is measured, for example, with a laser diffractometer or an image analyzer.

In the positive electrode material 1000, the solid electrolyte 100 and the positive electrode active material 110 may be in contact with each other.

The positive electrode material 1000 may include a plurality of particles of the solid electrolyte 100 and a plurality of particles of the positive electrode active material 110.

In the positive electrode material 1000, the content of the solid electrolyte 100 and the content of the positive electrode active material 110 may be equal to or different from each other.

The positive electrode material 1000 may include a plurality of the conductive materials 140.

The positive electrode material 1000 may include a plurality of the first conductive materials 150 and a plurality of the second conductive materials 160.

<Manufacturing method for positive electrode material>

The positive electrode material 1000 can be manufactured, for example, by the following method.

The positive electrode active material 110, the solid electrolyte 100, and the conductive material 140 are mixed in a solvent to obtain a mixture of these materials. The mixture may include a binder. The conductive material 140 includes the first conductive material 150 and the second conductive material 160. Thus, the positive electrode material 1000 including the mixture of the positive electrode active material 110, the solid electrolyte 100, and the conductive material 140 is obtained.

The method for mixing the positive electrode active material 110, the solid electrolyte 100, and the conductive material 140 is not particularly limited. For example, a machine such as a homogenizer may be used to mix these materials. Using a homogenizer can achieve homogeneous mixing. The mixing ratio between the positive electrode active material 110 and the solid electrolyte 100 is not particularly limited.

(Modification 1)

FIG. 2 is a cross-sectional view schematically showing the configuration of a positive electrode material 1001 according to Modification 1. The positive electrode material 1001 further includes a coating layer 120 coating at least a portion of the surface of the positive electrode active material 110. The positive electrode active material 110 whose surface is at least partially coated with the coating layer 120 is referred to as a "coated active material 130". Thus, the positive electrode material 1001 may further include the coating layer 120 coating at least a portion of the surface of the positive electrode active material 110. According to the above configuration, it is possible to further reduce the battery resistance, thereby enhancing the battery charge and discharge characteristics.

The coating layer 120 is in direct contact with the positive electrode active material 110.

The material for the coating layer 120 is hereinafter referred to as a "coating material". The coated active material 130 includes the positive electrode active material 110 and the coating material. The coating material is present on at least a portion of the surface of the positive electrode active material 110 thus to form the coating layer 120.

The coating layer 120 may uniformly coat the positive electrode active material 110. According to the above configuration, the positive electrode active material 110 and the coating layer 120 are in close contact with each other, and consequently the battery resistance can be further reduced.

The coating layer 120 may coat only a portion of the surface of the positive electrode active material 110. According to the above configuration, the particles of the positive electrode active material 110 are in direct contact with each other through their portions that are not coated with the coating layer 120, thereby enhancing the electronic conductivity between the particles of the positive electrode active material 110. This enables the battery to operate at a high output.

The coating of the positive electrode active material 110 with the coating layer 120 suppresses formation of an oxide film due to oxidative decomposition of a different solid electrolyte during charge of the battery. This enhances the battery charge and discharge efficiency. An example of the different solid electrolyte is the solid electrolyte 100.

The coating material may include Li and at least one selected from the group consisting of O, F, and Cl.

The coating material may include at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

The coating material may be lithium niobate (LiNbOs). Lithium niobate has a high ionic conductivity and a high potential stability.

<Manufacturing method for positive electrode material>

The positive electrode material 1001 can be manufactured by replacing the positive electrode active material 110 with the coated active material 130 in the manufacturing method for the positive electrode material 1000 described in Embodiment 1.

The coated active material 130 can be manufactured by forming the coating layer 120 on the surface of each of the particles of the positive electrode active material 110. The method for forming the coating layer 120 is not particularly limited. Examples of the method for forming the coating layer 120 include liquid phase coating and vapor phase coating.

For example, in liquid phase coating, a precursor solution of an ion-conducting material is applied to the surface of the positive electrode active material 110. In the case where the coating layer 120 including LiNbOs is formed, the precursor solution can be a mixed solution (sol solution) of a solvent, a lithium alkoxide, and a niobium alkoxide. The lithium alkoxide is, for example, lithium ethoxide. The niobium alkoxide is, for example, niobium ethoxide. The solvent is, for example, an alcohol, such as ethanol. The amounts of the lithium alkoxide and the niobium alkoxide are adjusted to the target composition of the coating layer 120. As necessary, water may be added to the precursor solution. The precursor solution may be acidic or alkaline.

The method for applying the precursor solution to the surface of the positive electrode active material 110 is not particularly limited. For example, a tumbling fluidized bed granulating-coating machine can be used to apply the precursor solution to the surface of the positive electrode active material 110. The tumbling fluidized bed granulating-coating machine sprays the precursor solution on the positive electrode active material 110 while tumbling and fluidizing the positive electrode active material 110, so that the precursor solution can be applied to the surface of the positive electrode active material 110. Thus, a precursor film is formed on the surface of the positive electrode active material 110. Subsequently, the positive electrode active material 110 coated with the precursor film is heat-treated. The heat treatment promotes the gelation of the precursor film and thus forms the coating layer 120. Thus, the coated active material 130 is obtained. At this point, the coating layer 120 coats almost the entire surface of the positive electrode active material 110. The coating layer 120 has an almost uniform thickness.

Examples of vapor phase coating include pulsed laser deposition (PLD), vacuum deposition, sputtering, thermal chemical vapor deposition (CVD), and plasma chemical vapor deposition. For example, in PLD, an ion-conducting material serving as the target is irradiated with a high-energy pulsed laser (e.g., KrF excimer laser, wavelength: 248 nm), and the ion-conducting material thus sublimated is deposited on the surface of the positive electrode active material 110. In the case where the coating layer 120 of LiNbOs is formed, the target used is LiNbOs sintered to a high density.

(Embodiment 2)

Embodiment 2 will be described below. The description overlapping that of Embodiment 1 will be omitted as appropriate.

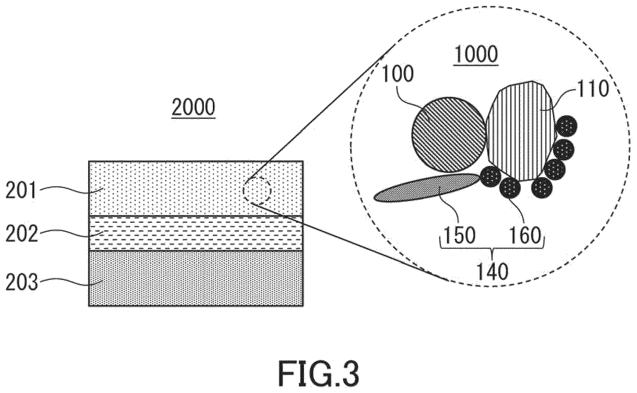

FIG. 3 is a cross-sectional view schematically showing the configuration of a battery 2000 according to Embodiment 2.

The battery 2000 according to Embodiment 2 includes a positive electrode 201, an electrolyte layer 202, and a negative electrode 203. The positive electrode 201 includes, for example, the positive electrode material 1000 according to Embodiment 1 or the positive electrode material 1001 according to Modification 1. The electrolyte layer 202 is disposed between the positive electrode 201 and the negative electrode 203. FIG. 3 shows the positive electrode material 1000 as an example of the positive electrode material included in the positive electrode 201.

According to the above configuration, it is possible to enhance the charge and discharge characteristics of the battery 2000.

In the case where the positive electrode material is the positive electrode material 1000 according to Embodiment 1, the volume ratio "v1:100 - v1" between the positive electrode active material 110 and the solid electrolyte 100 included in the positive electrode 201 may satisfy $30 \leq v1 \leq 95$. Here, v1 represents the volume ratio of the positive electrode active material 110 based on 100 of the sum of the volumes of the positive electrode active material 110 and the solid electrolyte 100 included in the positive electrode 201. In the case where $30 \leq v1$ is satisfied, the battery 2000 can achieve a sufficient energy density. In the case where $v1 \leq 95$ is satisfied, the battery 2000 can operate at a high output.

In the case where the positive electrode material is the positive electrode material 1001 according to Modification 1, the volume ratio "v11:100 - v11" between the coated active material 130 and the solid electrolyte 100 included in the positive electrode 201 may satisfy $30 \leq v11 \leq 95$. Here, v11 represents the volume ratio of the coated active material 130 based on 100 of the sum of the volumes of the coated active material 130 and the solid electrolyte 100 included in the positive electrode 201. In the case where $30 \leq v11$ is satisfied, the battery 2000 can achieve a sufficient energy density. In the case where $v11 \leq 95$ is satisfied, the battery 2000 can operate at a high output.

The positive electrode 201 may have a thickness of 10 $\mu$m or more and 500 $\mu$m or less. In the case where the positive electrode 201 has a thickness of 10 $\mu$m or more, the battery 2000 can achieve a sufficient energy density. In the case where the positive electrode 201 has a thickness of 500 $\mu$m or less, the battery 2000 can operate at a high output.

The electrolyte layer 202 is a layer including an electrolyte. The electrolyte is, for example, a solid electrolyte. In other words, the electrolyte layer 202 may be a solid electrolyte layer. The solid electrolyte included in the electrolyte layer 202 may be any of the materials described as examples for the solid electrolyte 100 in Embodiment 1. In other words, the electrolyte layer 202 may include a solid electrolyte having the same composition as the composition of the solid electrolyte 100. According to the above configuration, it is possible to further enhance the charge and discharge efficiency of the battery 2000.

The electrolyte layer 202 may include a halide solid electrolyte having composition different from the composition of the solid electrolyte 100.

The electrolyte layer 202 may include a sulfide solid electrolyte. According to the above configuration, it is possible to further enhance the charge and discharge characteristics of the battery 2000.

The electrolyte layer 202 may include only one solid electrolyte selected from the materials described as examples for the solid electrolyte.

The electrolyte layer 202 may include two or more solid electrolytes selected from the materials described as examples for the solid electrolyte. In this case, the plurality of solid electrolytes are different in composition from each other. For example, the electrolyte layer 202 may include a halide solid electrolyte and a sulfide solid electrolyte.

The electrolyte layer 202 may have a thickness of 1 $\mu$m or more and 300 $\mu$m or less. In the case where the electrolyte layer 202 has a thickness of 1 $\mu$m or more, the positive electrode 201 and the negative electrode 203 are less prone to be short-circuited. In the case where the electrolyte layer 202 has a thickness of 300 $\mu$m or less, the battery 2000 can operate at a high output.

The negative electrode 203 includes a material having properties of occluding and releasing metal ions (e.g., lithium ions). The negative electrode 203 includes, for example, a negative electrode active material.

The negative electrode active material can be a metal material, a carbon material, an oxide, a nitride, a tin compound, a silicon compound, or the like. The metal material may be a simple substance of metal. The metal material may be an alloy. Examples of the metal material include lithium metal and a lithium alloy. Examples of the carbon material include natural graphite, coke, partially graphitized carbon, a carbon fiber, spherical carbon, artificial graphite, and amorphous carbon. In the case where silicon (Si), tin (Sn), the silicon compound, the tin compound, or the like is used, the capacity density can be enhanced.

The negative electrode 203 may include a solid electrolyte. According to the above configuration, the lithium-ion conductivity in the negative electrode 203 is enhanced, thereby enabling the battery 2000 to operate at a high output. The solid electrolyte that may be included in the negative electrode 203 may be any of the materials described as examples for the solid electrolyte 100 in Embodiment 1. In other words, the negative electrode 203 may include a solid electrolyte having the same composition as the composition of the solid electrolyte 100.

The solid electrolyte that may be included in the negative electrode 203 according to Embodiment 2 may have any shape. The solid electrolyte that may be included in the negative electrode 203 may be, for example, acicular, spherical, or ellipsoidal. The solid electrolyte that may be included in the negative electrode 203 may be, for example, particulate.

In the case where the solid electrolyte that may be included in the negative electrode 203 is particulate (e.g., spherical), the solid electrolyte may have a median diameter of 100 $\mu$m or less. In the case where the solid electrolyte has a median diameter of 100 $\mu$m or less, the negative electrode active material and the solid electrolyte can form a favorable dispersion state in the negative electrode 203. This enhances the charge and discharge characteristics of the battery 2000.

The solid electrolyte that may be included in the negative electrode 203 may have a median diameter of 10 $\mu$m or less and may have a median diameter of 1 $\mu$m or less. According to the above configuration, the negative electrode active material and the solid electrolyte can form a favorable dispersion state in the negative electrode 203.

In the negative electrode 203, the solid electrolyte may have a smaller median diameter than the negative electrode active material. According to the above configuration, the negative electrode active material and the solid electrolyte can form a more favorable dispersion state in the negative electrode 203.

The negative electrode active material according to Embodiment 2 may have any shape. The negative electrode active material may be, for example, acicular, spherical, or ellipsoidal. The negative electrode active material may be, for example, particulate.

The negative electrode active material may have a median diameter of 0.1 $\mu$m or more and 100 $\mu$m or less. In the case where the negative electrode active material has a median diameter of 0.1 $\mu$m or more, the negative electrode active material and the solid electrolyte can form a favorable dispersion state in the negative electrode 203. This enhances the charge and discharge characteristics of the battery 2000. In the case where the negative electrode active material has a median diameter of 100 $\mu$m or less, lithium diffuses in the negative electrode active material at a sufficient rate. This enables the battery 2000 to operate at a high output.

In the negative electrode 203, the negative electrode active material may have a larger median diameter than the solid electrolyte. In this case, the negative electrode active material and the solid electrolyte can form a favorable dispersion state.

The volume ratio "v2:100 - v2" between the negative electrode active material and the solid electrolyte included in the negative electrode 203 may satisfy $30 \leq v2 \leq 95$. Here, v2 represents the volume ratio of the negative electrode active material based on 100 of the sum of the volumes of the negative electrode active material and the solid electrolyte included in the negative electrode 203. In the case where $30 \leq v2$ is satisfied, the battery 2000 can achieve a sufficient energy density. In the case where $v2 \leq 95$ is satisfied, the battery 2000 can operate at a high output.

The negative electrode 203 may have a thickness of 10 $\mu$m or more and 500 $\mu$m or less. In the case where the negative electrode 203 has a thickness of 10 $\mu$m or more, the battery 2000 can achieve a sufficient energy density. In the case where the negative electrode 203 has a thickness of 500 $\mu$m or less, the battery 2000 can operate at a high output.

At least one selected from the group consisting of the positive electrode 201, the electrolyte layer 202, and the negative electrode 203 may include a binder for the purpose of enhancing the adhesion between the particles. The binder is used to enhance the binding properties of the materials for the electrodes. Examples of the binder include polyvinylidene fluoride, polytetrafluoroethylene, polyethylene, polypropylene, an aramid resin, a polyamide, a polyimide, a polyamide-imide, polyacrylonitrile, a polyacrylic acid, polyacrylic acid methyl ester, polyacrylic acid ethyl ester, polyacrylic acid hexyl ester, a polymethacrylic acid, polymethacrylic acid methyl ester, polymethacrylic acid ethyl ester, polymethacrylic acid hexyl ester, polyvinyl acetate, polyvinylpyrrolidone, a polyether, a polyethersulfone, hexafluoropolypropylene, styrenebutadiene rubber, and carboxymethyl cellulose. Moreover, the binder can also be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, an acrylic acid, and hexadiene. Furthermore, the binder may be a mixture of two or more selected from the above materials.

The negative electrode 203 may include a conductive additive for the purpose of enhancing the electronic conductivity. The conductive additive can be, for example, graphite, such as natural graphite or artificial graphite, carbon black, such as acetylene black or ketjen black, a conductive fiber, such as a carbon fiber or a metal fiber, fluorinated carbon, a metal powder, such as an aluminum powder, a conductive whisker, such as a zinc oxide whisker or a potassium titanate whisker, a conductive metal oxide, such as titanium oxide, or a conductive polymer compound, such as a polyaniline compound, a polypyrrole compound, or a polythiophene compound. In the case where a conductive carbon additive is used, cost reduction can be achieved.

Examples of the shape of the battery 2000 according to Embodiment 2 include a coin type, a cylindrical type, a prismatic type, a sheet type, a button type, a flat type, and a stacked type.

Examples

The present disclosure will be described below in detail with reference to examples and reference examples.

<<Example 1>>

[Production of sulfide solid electrolyte]

In an argon glove box with a dew point of -60°C or lower, raw material powders $Li_2S$ and $P_2S_5$ were weighed in a molar ratio of $Li_2S:P_2S_5 = 75:25$. The raw material powders were pulverized and mixed in a mortar to obtain a mixture. Subsequently, the mixture was milled in a planetary ball mill (Type P-7 manufactured by Fritsch GmbH) at 510 rpm for 10 hours. Thus, a glassy solid electrolyte was obtained. The solid electrolyte obtained was heat-treated in an inert atmosphere at 270°C for 2 hours. Thus, a glass-ceramic sulfide solid electrolyte $Li_2S$-$P_2S_5$ (hereinafter referred to as LPS) was produced.

[Production of coated active material]

The positive electrode active material used was lithium nickel cobalt aluminum oxide $LiNi_{0.8}(Co,Al)_{0.2}O_2$ (hereinafter referred to as NCA). The coating material used was LiNbOs. A coating layer including LiNbOs was formed by liquid phase coating. Thus, a coated active material (hereinafter referred to as Nb-NCA) was produced.

[Production of positive electrode material]

The first conductive material used was a carbon fiber (VGCF-H manufactured by SHOWA DENKO K.K.). VGCF-H had an average long-axis diameter of 6 $\mu$m. The second conductive material used was acetylene black. Acetylene black had an average particle diameter of 35 nm. In an argon glove box with a dew point of -60°C or lower, a binder, a solvent, and acetylene black were mixed, and dispersed with a homogenizer. Nb-NCA was added thereto and mixed, and dispersed with a homogenizer. Furthermore, LPS and VGCF-H were added thereto and mixed, and dispersed with a homogenizer. Thus, a positive electrode slurry was produced. The mixing ratio between the positive electrode active material (NCA) and the solid electrolyte (LPS) was 70:30 in terms of volume ratio. Table 1 shows the ratio of the mass of the first conductive material (VGCF-H) to the mass of the positive electrode active material (NCA) and the ratio of the mass of the second conductive material (acetylene black) to the mass of the positive electrode active material (NCA). "VGCF" is a registered trademark of SHOWA DENKO K.K.

[Production of positive electrode]

The slurry produced was applied to a current collector and dried on a hot plate to produce a positive electrode.

[Production of negative electrode]

The negative electrode active material used was lithium titanate $Li_4Ti_5O_{12}$ (hereinafter referred to as LTO). In an argon glove box with a dew point of -60°C or lower, a binder, a solvent, LPS, and VGCF-H were mixed, and dispersed with a homogenizer. LTO was added thereto and mixed, and dispersed with a homogenizer. Thus, a negative electrode slurry was produced. The mixing ratio between the negative electrode active material (LTO) and the solid electrolyte (LPS) was 65:35 in terms of volume ratio. The ratio of the mass of VGCF-H to the mass of the negative electrode active material (LTO) was 2.4%. The negative electrode slurry produced was applied to a current collector and dried on a hot plate to produce a negative electrode.

[Production of electrolyte layer]

LPS, a binder, and a solvent were mixed, and dispersed with a homogenizer. Thus, a solid electrolyte slurry was produced. The solid electrolyte slurry produced was applied to a substrate and dried on a hot plate to produce an electrolyte layer.

[Production of battery]

The electrolyte layer was laid on the positive electrode and these were pressed under heat, and then the substrate for the electrolyte layer was removed. Thus, a positive electrode side stack was obtained in which the electrolyte layer was provided on the surface of the positive electrode. Similarly, the solid electrolyte was laid on the negative electrode and these were pressed under heat, and then the substrate for the solid electrolyte was removed. Thus, a negative electrode side stack was obtained in which the electrolyte layer was provided on the surface of the negative electrode.
Subsequently, the positive electrode side stack and the negative electrode side stack were each subjected to punching, and were laid on top of each other so that the respective electrolyte layers would face each other. Here, the laying on top of each other was performed while an unpressed electrolyte layer was transferred between the electrolyte layer of the positive electrode side stack and the electrolyte layer of the negative electrode side stack. Thereafter, these were pressed at 2 t/cm$^2$ at 130°C. Thus, a power generation element including the positive electrode, the electrolyte layer, and the negative electrode was obtained. The power generation element obtained was sealed in laminate and confined at 5 MPa to obtain a battery for evaluation.

<<Example 2>>

In the producing step for the positive electrode material, acetylene black having an average particle diameter of 48 nm was used as the second conductive material. In the same manner as in Example 1 except for the above, a battery of Example 2 was obtained.

<<Example 3>>

In the producing step for the positive electrode material, acetylene black having an average particle diameter of 66 nm was used as the second conductive material. In the same manner as in Example 1 except for the above, a battery of Example 3 was obtained.

<<Example 4>>

In the producing step for the positive electrode material, acetylene black having an average particle diameter of 95 nm was used as the second conductive material. In the same manner as in Example 1 except for the above, a battery of Example 4 was obtained.

<<Reference Example 1>>

In the producing step for the positive electrode material, furnace black having an average particle diameter of 14 nm was used as the second conductive material. In the same manner as in Example 1 except for the above, a battery of Reference Example 1 was obtained.

<<Reference Example 2>>

In the producing step for the positive electrode material, furnace black having an average particle diameter of 18 nm was used as the second conductive material. In the same manner as in Example 1 except for the above, a battery of Reference Example 2 was obtained.

<<Reference Example 3>>

In the producing step for the positive electrode material, acetylene black having an average particle diameter of 23 nm was used as the second conductive material. In the same manner as in Example 1 except for the above, a battery of Reference Example 3 was obtained.

(Charge and discharge test)

Next, the batteries of the examples and the reference examples were each subjected to a charge and discharge test under the following conditions.
The battery was placed in a thermostatic chamber set to 25°C and connected to a charge and discharge device.
Constant-current charge was performed at a current of 2 mA equivalent to 0.1 C rate (10-hour rate) relative to the theoretical capacity of the battery to a voltage of 2.7 V. Subsequently, constant-voltage charge was performed at a voltage of 2.7 V to a current of 0.2 mA equivalent to 0.01 C rate (100-hour rate). The charge was thus terminated. Thereafter, in the same manner, constant-current discharge was performed at 0.1 C rate to a voltage of 1.5 V, and then constant-voltage discharge was performed at a voltage of 1.5 V to 0.01 Crate.

Next, charge was performed again under the same conditions. Thereafter, constant-current charge was performed at 0.1 C rate to a voltage of 2.65 V, and then constant-voltage discharge was performed at a voltage of 2.65 V to 0.01 C rate.

Furthermore, after a pause, constant-current charge was performed at 24 mA equivalent to 12 C rate for 5 seconds. The direct current resistance of the battery calculated by the following equation (3) is referred to as DCR:

$$DCR = (V - Vo) \times S/I \quad \text{Equation (3)}$$

In the equation (3), Vo is the voltage before the 5-second charge, V is the voltage after the 5-second charge, S is the contact area between the positive electrode and the electrolyte layer, and I is the current value, specifically 24 mA.

The DCR of the battery calculated by the above equation (3) (DCR before durability test) is shown Table 1. The values in Table 1 are normalized based on 100 of the DCR before durability test of the battery of Example 1.

Subsequently, the battery was placed in a thermostatic chamber set to 60°C, connected to a charge and discharge device, and subjected to a durability test.

At this point, constant-current charge was performed at 10 mA equivalent to 5 C rate to a voltage of 2.7 V, and then constant-voltage charge was performed at 2.7 V to a current of 0.6 mA equivalent to 0.3 C. The charge was thus terminated. Thereafter, in the same manner, constant-current discharge was performed at 1 C rate to a voltage of 1.5 V, and then constant-voltage discharge was performed at a voltage of 1.5 V to 0.01 C rate. One set of the above charge and discharge is defined as one cycle. In the durability test, the above charge and discharge were performed for 500 cycles.

After the completion of the durability test, the thermostatic chamber was cooled to 25°C, and the direct current resistance (DCR) of the battery was calculated by the above equation (3). The calculated direct current resistance of the battery (DCR after durability test) is shown in Table 1. The values in Table 1 are normalized based on 100 of the DCR before durability test of the battery of Example 1.

The value determined by the following equation (4) from the DCR before durability test and the DCR after durability test is referred to as a resistance change rate:

Resistance change rate = DCR after durability test/DCR before durability test Equation (4).

The resistance change rate of the battery calculated by the above equation (4) is shown in Table 1.

[Table 1]

| | Second conductive material | | | First conductive material | DCR before durability test | DCR after durability test | Resistance change rate |
|---|---|---|---|---|---|---|---|
| | Type | Average particle diameter (nm) | Mass ratio to positive electrode active material (%) | Mass ratio to positive electrode active material (%) | | | |
| Example 1 | Acetylene black | 35 | 0.3 | 2 | 100.0 | 138.0 | 1.380 |
| Example 2 | Acetylene black | 48 | 0.3 | 2 | 99.7 | 128.3 | 1.287 |
| Example 3 | Acetylene black | 66 | 0.3 | 2 | 96.1 | 129.4 | 1.347 |
| Example 4 | Acetylene black | 95 | 0.3 | 2 | 91.8 | 127.4 | 1.388 |
| Reference Example 1 | Furnace black | 14 | 0.3 | 2 | 84.2 | 119.9 | 1.425 |
| Reference Example 2 | Furnace black | 18 | 0.3 | 2 | 81.0 | 114.9 | 1.419 |

(continued)

| | Second conductive material | | | First conductive material | DCR before durability test | DCR after durability test | Resistance change rate |
| | | | | | | | |
| | Type | Average particle diameter (nm) | Mass ratio to positive electrode active material (%) | Mass ratio to positive electrode active material (%) | | | |
| Reference Example 3 | Acetylene black | 23 | 0.3 | 2 | 81.9 | 115.2 | 1.405 |

<<Consideration>>

Table 1 demonstrates the following tendency: the second conductive material having a smaller average particle diameter exhibits a lower value of the DCR before durability test. This is presumably due to the following reason. The smaller the average particle diameter of the second conductive material is, the more easily the second conductive material adheres to the surface of the positive electrode active material. Consequently, on the surface of the positive electrode active material, the ion conduction paths are less subject to interruption and thus electron conduction paths can be formed. This increases the effective reaction area of the positive electrode active material. Conversely, the larger the average particle diameter of the second conductive material is, the less easily the second conductive material adheres to the surface of the positive electrode active material. This causes difficulties in forming electron conduction paths, thereby increasing the resistance.

It is demonstrated that the resistance change rate between before and after the charge and discharge cycles takes the minimum value when the second conductive material has an average particle diameter of about 50 nm (Example 2). Reference Examples 1 to 3 all exhibited a high resistance change rate, 1.40 or more, as compared with Examples 1 to 4. In Reference Examples 1 to 3, the second conductive material had an excessively small average particle diameter, thereby increasing the contact area between the solid electrolyte and the positive electrode active material. This presumably promoted the decomposition reaction of the solid electrolyte and thus resulted in a further increased resistance.

From the above, Examples 1 to 4, which included the second conductive material having an average particle diameter of more than 23 nm and 100 nm or less, exhibited a reduced resistance change rate between before and after the charge and discharge cycles and consequently succeeded in enhancing battery charge and discharge characteristics. Examples 1 to 3, which included the second conductive material having an average particle diameter of more than 23 nm and 70 nm or less, exhibited a further reduced resistance change rate. Examples 1 and 2, which included the second conductive material having an average particle diameter of more than 23 nm and 50 nm or less, exhibited an even further reduced resistance change rate.

INDUSTRIAL APPLICABILITY

The battery of the present disclosure can be used as, for example, an all-solid-state lithium secondary battery.

**Claims**

1. A positive electrode material comprising

    a mixture of a positive electrode active material, a solid electrolyte, and a conductive material, wherein
    the conductive material includes a first conductive material having an average long-axis diameter of 1 $\mu$m or more and a second conductive material having an average particle diameter of more than 23 nm and 100 nm or less, and
    a ratio of a volume of the positive electrode active material to a sum of the volume of the positive electrode active material and a volume of the solid electrolyte is 50% or more and 90% or less.

2. The positive electrode material according to claim 1, wherein
    the ratio of the volume of the positive electrode active material to the sum of the volume of the positive electrode active material and the volume of the solid electrolyte is 65% or more and 85% or less.

3.  The positive electrode material according to claim 2, wherein
    the ratio of the volume of the positive electrode active material to the sum of the volume of the positive electrode active material and the volume of the solid electrolyte is 67% or more and 75% or less.

4.  The positive electrode material according to any one of claims 1 to 3, wherein
    a ratio of a mass of the conductive material to a mass of the positive electrode active material is 10% or less.

5.  The positive electrode material according to claim 4, wherein
    the ratio of the mass of the conductive material to the mass of the positive electrode active material is 3% or less.

6.  The positive electrode material according to any one of claims 1 to 5, wherein
    a ratio of a mass of the second conductive material to the mass of the conductive material is 80% or less.

7.  The positive electrode material according to claim 6, wherein
    the ratio of the mass of the second conductive material to the mass of the conductive material is 5% or more and 50% or less.

8.  The positive electrode material according to claim 6, wherein
    the ratio of the mass of the second conductive material to the mass of the conductive material is 6% or more and 25% or less.

9.  The positive electrode material according to any one of claims 1 to 8, wherein
    the first conductive material has an average long-axis diameter of 4 $\mu$m or more.

10. The positive electrode material according to any one of claims 1 to 9, wherein
    the second conductive material has an average particle diameter of more than 23 nm and 70 nm or less.

11. The positive electrode material according to claim 10, wherein
    the second conductive material has an average particle diameter of more than 23 nm and 50 nm or less.

12. The positive electrode material according to any one of claims 1 to 11, wherein
    the conductive material includes a carbon material.

13. The positive electrode material according to any one of claims 1 to 12, wherein
    the first conductive material includes a fibrous carbon material.

14. The positive electrode material according to any one of claims 1 to 13, wherein
    the second conductive material includes carbon black.

15. The positive electrode material according to claim 14, wherein
    the carbon black includes acetylene black.

16. The positive electrode material according to any one of claims 1 to 15, wherein
    the solid electrolyte includes at least one selected from the group consisting of a sulfide solid electrolyte and a halide solid electrolyte.

17. The positive electrode material according to any one of claims 1 to 16, wherein
    the positive electrode active material has a layered rock salt structure.

18. The positive electrode material according to any one of claims 1 to 17, further comprising
    a coating layer coating at least a portion of a surface of the positive electrode active material.

19. A battery comprising:

    a positive electrode including the positive electrode material according to any one of claims 1 to 18;
    a negative electrode; and
    an electrolyte layer disposed between the positive electrode and the negative electrode.

**20.** The battery according to claim 19, wherein
the electrolyte layer includes a sulfide solid electrolyte.

1000

100

110

150  160

140

FIG.1

1001

120  130
110

100

150  160

140

FIG.2

20

2000

201

202

203

1000

100

110

150    160

140

FIG.3

## INTERNATIONAL SEARCH REPORT

| International application No. |
|---|
| **PCT/JP2022/048052** |

### A. CLASSIFICATION OF SUBJECT MATTER

*H01M 4/13*(2010.01)i; *H01M 4/36*(2006.01)i; *H01M 4/62*(2006.01)i; *H01M 10/0562*(2010.01)i
FI:    H01M4/13; H01M4/36 C; H01M4/62 Z; H01M10/0562

According to International Patent Classification (IPC) or to both national classification and IPC

### B. FIELDS SEARCHED

Minimum documentation searched (classification system followed by classification symbols)

H01M4/13; H01M4/36; H01M4/62; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/203545 A1 (FUJIFILM CORPORATION) 08 October 2020 (2020-10-08) claims, paragraphs [0016], [0026]-[0029], [0042]-[0043], [0054]-[0060], example no. 12 | 1-20 |
| A | JP 2016-9679 A (SAMSUNG ELECTRONICS CO., LTD.) 18 January 2016 (2016-01-18) | 1-20 |
| A | JP 2016-58277 A (TOYOTA MOTOR CORP) 21 April 2016 (2016-04-21) | 1-20 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 January 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/048052**

| Patent document cited in search report | | | Publication date (day/month/year) | Patent family member(s) | | | Publication date (day/month/year) |
|---|---|---|---|---|---|---|---|
| WO | 2020/203545 | A1 | 08 October 2020 | (Family: none) | | | |
| JP | 2016-9679 | A | 18 January 2016 | (Family: none) | | | |
| JP | 2016-58277 | A | 21 April 2016 | US | 2016/0072120 | A1 | |
| | | | | CN | 105406033 | A | |

Form PCT/ISA/210 (patent family annex) (January 2015)

**EP 4 462 493 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015076180 A